# EUROPEAN PATENT SPECIFICATION

(11) **EP 3 280 269 B1**
(45) Date of publication and mention of the grant of the patent: **16.08.2023**
(21) Application number: 16719975.1
(22) Date of filing: 05.04.2016
(51) Int. Cl.: A23G 3/02, A23G 3/34

(54) **SYSTEM AND METHOD FOR EXTRUDING CONFECTIONERY PRODUCTS**
VORRICHTUNG UND VERFAHREN ZUM EXTRUDIEREN VON SÜSSWAREN
SYSTÈME ET PROCÉDÉ POUR L'EXTRUSION DES CONFISERIES

(30) Priority: 06.04.2015 US 201562143530 P
(43) Date of publication of application: 14.02.2018
(73) Proprietor: Intercontinental Great Brands LLC, East Hanover, NJ 07936 (US)
(72) Inventor: ZIER, Maxi, 81737 Munich (DE); OVUL, Toygun, East Hanover, NJ 07936 (US); EICHLER, Andre, Birmingham West Midlands B30 2LU (GB)
(74) Representative: Boult Wade Tennant LLP
(86) International application number: PCT/US2016/026012
(87) International publication number: WO 2016/164346

(56) References cited:
- EP-A1- 0 883 998
- EP-A1- 2 594 138
- DE-A1- 3 420 026
- US-A- 3 908 032
- US-B1- 6 180 158

## Description

### FIELD

The disclosure generally relates to a confectionery produce and more particularly to a method for continuously forming a confectionery product via a mixer.

### BACKGROUND

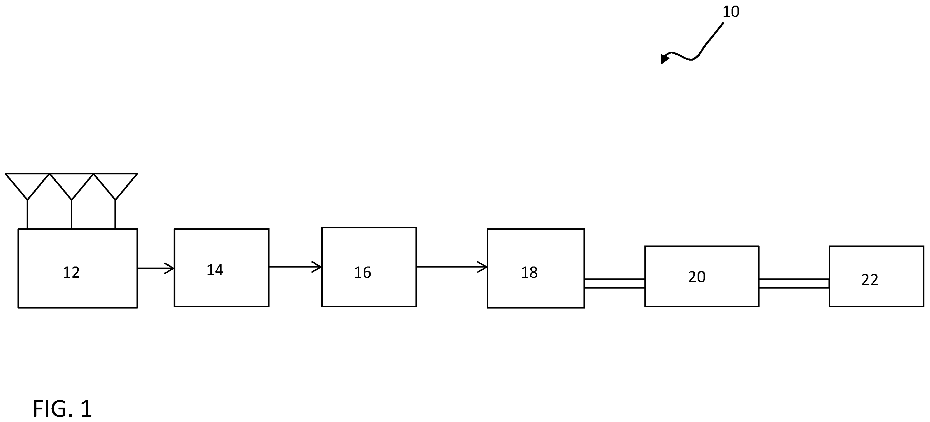

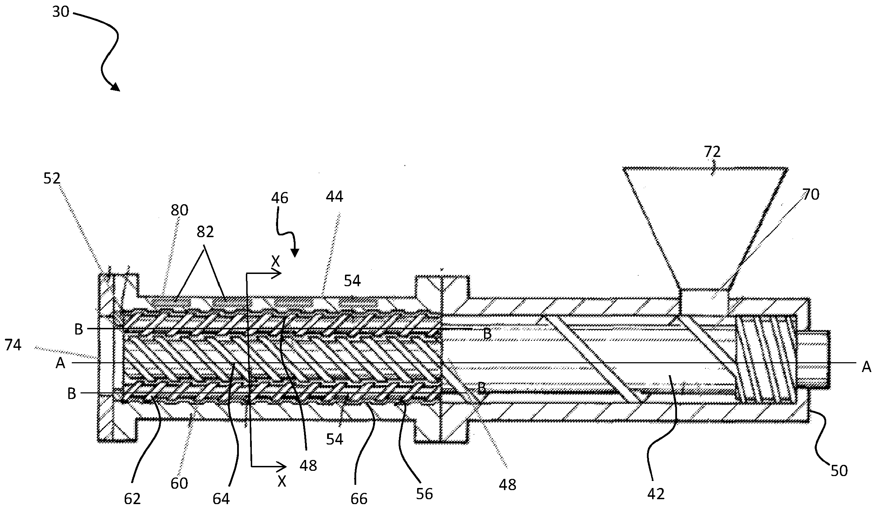

Comestible products such as confectioneries, and more particularly candy, are typically formed through a complex production process. An example of a conventional process for manufacturing a confectionery product 10 is illustrated in FIG. 1. As shown, multiple ingredients are first provided to a mixer 12, where the ingredients are combined to form a slurry. This slurry is then provided to a cooker 14 where the ingredients are further mixed and heated via an application of steam. As a result of the added heat, one or more of the ingredients may dissolve and moisture may be removed from the composition, resulting in a more viscous composition. After being cooled by a cooling mechanism 16, such as a cooling tunnel or a cooling drum, to a temperature of about 70°C, the composition is provided to another mixer 18 where one or more additional ingredients including color and flavor are added. The composition is again cooled via a cooling belt and is further mixed and formed within a forming extruder 20. The confectionery extrudate is output from the extruder 20 at a temperature of about 45°C and in one or more pieces having a desired shape. The extrudate is cooled prior to being supplied to a packaging station 22 where the extrudate is cut, wrapped, and packaged.

In embodiments where the confectionery is a crystallized and aerated confectionery, the production process further includes seeding the composition with a crystallization aid, such as citric acid for example, and then supplying the composition to a pulling machine configured to repeatedly stretch the composition upstream from the extruder 20. Together the crystallization aid and the work generated by the pulling machine initiate crystallization of the composition. Only after crystallization has begun is the composition supplied to a cooling mechanism, such as a cooling belt, and then to an extruder for forming into a desired shape.

In embodiments where the confectionery is a crystallized non-aerated confectionery, the production process further includes supplying the composition to additional mixing step after the first cooling and before color and flavor addition to apply mechanical energy to the confectionery mass to crystallize it.

In embodiments where the confectionery is a non-crystallized, aerated confectionery, the production process further includes supplying the composition to a pulling machine configured to repeatedly stretch the composition upstream from the extruder. Composition temperatures of around 30°C are required to form it into its desired form.

As illustrated, these production processes have a substantial number of production steps, requiring multiple pieces of machinery and a large amount of space for operation. Many of these pieces of equipment require manual labor for operation, thereby resulting in high labor costs and ultimately, higher product costs. In addition, substantial variation commonly occurs between confectionery products within the same batch and different batches as a result of this manual labor.

Further, in typical confectionery production, there is usually a need to allow the final product to set or cool. In some situations, only after the confectionery has settled for the required period of time can it then be packaged for distribution. This lengthy period of time is undesirable, as it greatly slows down the process of making and processing confectionery products.

US-B-6180158 discloses a continuous method for preparing an aerated confection such as marshmallows from a concentrated sugar syrup. The syrup is mixed with other ingredients to form a blended sugar syrup slurry which is cooked then cooled to minimize the formation and growth of sugar crystals. The mixture is then mixed with dry crystallized sugar or seeded with dry sugar crystals to form a seeded liquid confection blend which is pumped to an aerator to form the final product.

EP-A-2594138 discloses a process for making a confection containing a sweetener, at least a proportion of which is in crystal form. The confection made by this process is hard and brittle and crunchy. The confection is made by mixing a confection mass with a sweetener, melting the confection mass, crystalizing the confection mass such that a proportion of the sweetener is in crystal form and forming the confection mass into individual pieces.

### SUMMARY

According to an embodiment of the present disclosure, a method for extruding a confectionery is provided including supplying a plurality of ingredients to a planetary roller extruder. The ingredients are mixed to form a confectionery composition which is a soft candy in said mixer. Moisture is removed from said confectionary composition in said mixer. Crystals are formed in the confectionery composition while the confectionery composition is * in said planetary roller extruder producing said confectionery composition to include a density between about 0.5 and 1.6 g/cm³ and the confectionery composition is output from said planetary roller extruder.

In addition to one or more of the features described above, or as an alternative, in further embodiments no additional sizing of the confectionery composition occurs after being output from said planetary roller extruder.

In addition to one or more of the features described above, or as an alternative, in further embodiments said confectionery composition is output from said planetary roller extruder directly to a packaging station.

In addition to one or more of the features described above, or as an alternative, in further embodiments no additional treatment of the confectionery occurs after being output from said planetary roller extruder.

In addition to one or more of the features described above, or as an alternative, in further embodiments the confectionery composition is aerated within said planetary roller extruder to control a density thereof.

In addition to one or more of the features described above, or as an alternative, in further embodiments said density of said confectionery composition is less than or equal to about .8g/cc.

In addition to one or more of the features described above, or as an alternative, in further embodiments aerating said confectionery composition includes inputting a stream of gas into said confectionery composition.

In addition to one or more of the features described above, or as an alternative, in further embodiments forming crystals in said confectionery composition occurs as a result of mechanical shear generated by said planetary roller extruder when said confectionery composition is at a given temperature.

In addition to one or more of the features described above, or as an alternative, in further embodiments said confectionery composition is heated within said planetary roller extruder.

In addition to one or more of the features described above, or as an alternative, in further embodiments cooling said confectionery composition occurs downstream from said heating said confectionery composition.

In addition to one or more of the features described above, or as an alternative, in further embodiments the confectionery is configured as one of a plurality of layers of a multilayer confectionery.

In addition to one or more of the features described above, or as an alternative, in further embodiments combining the confectionery with another of said plurality of layers of said multilayer confectionery occurs before the confectionery is exposed to an atmosphere.

In addition to one or more of the features described above, or as an alternative, in further embodiments an elapsed time between supplying said plurality of ingredients to said planetary roller extruder and outputting said confectionery composition from said mixer is less than 20 minutes.

In addition to one or more of the features described above, or as an alternative, in further embodiments said confectionery composition is a first confectionery composition. A second confectionery composition is output from said planetary roller extruder following said outputting of said first confectionery composition. The second confectionery composition is output absent a formation of crystals.

### BRIEF DESCRIPTION OF THE DRAWINGS

The accompanying drawings incorporated in and forming a part of the specification embodies several aspects of the present invention and, together with the description, serve to explain the principles of the invention. In the drawings:
FIG. 1 is schematic diagram of an example of a conventional process for manufacturing a confectionery product;
FIG. 2 is a cross-sectional view of a confectionery mixer according to an embodiment of the invention;
FIG. 3 is a cross-sectional view of the confectionery mixer taken line X-X of FIG. 2 according to an embodiment of the invention;
FIG. 4 is a cross-sectional view of a confectionery mixer according to another embodiment of the invention;
FIG. 5 is a top view of a confectionery mixer according to yet another embodiment of the invention; and
FIG. 6 is a schematic diagram of a system for manufacturing a confectionery according to an embodiment of the invention.

The detailed description explains embodiments of the invention, together with advantages and features, by way of example with reference to the drawings.

### DETAILED DESCRIPTION

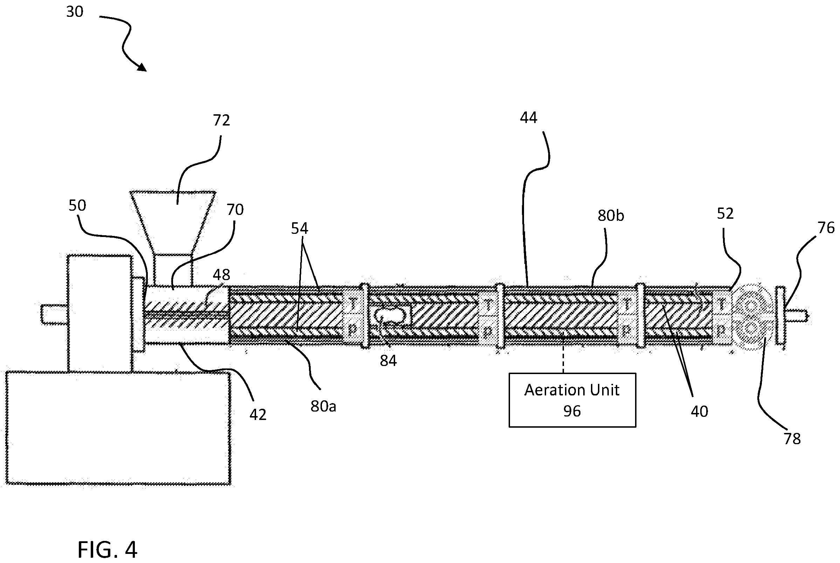

Referring now to FIGS. 2-4, a mixer or extruder 30 for forming a comestible, such as a confectionery, or more particularly a soft candy, is illustrated. Examples of confectioneries include, but are not limited to soft chewy candy. Though the extrudate or pieces of comestible discussed herein may include any type of edible product, for ease of description, the extrudate will be discussed herein below as a confectionery or candy.

As shown in the figures, the mixer 30 may be a single mixing device including a feed section 42 and a mixing barrel 44. Of course, it is understood that the mixing barrel 44 may include one or more coupled barrel sections 46. The term "barrel section" as used herein may refer to a single barrel, multiple grouped barrels, or a chosen portion of a single barrel.

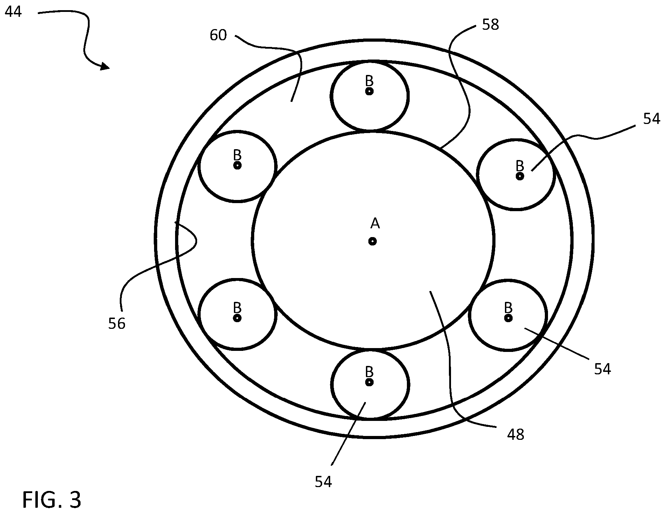

In the illustrated, non-limiting embodiment of FIGS. 2 and 3, the mixer 30 is a planetary roller extruder having a rotatable center shaft 48 that extends generally from a feed end 50 to an opposite, extrusion end 52 of the mixer 30. Because different areas of the mixer 30 may be configured to perform different functions, the center shaft 48 may include different diameters or configurations at various portions of the mixer 30.

The planetary roller extruder 30 additionally includes a plurality of rotatable planetary screws 54 arranged within one or more of the barrel sections 46. As best shown in FIG. 3, these screws 54 are arranged about the center shaft 48 and facilitate mixing of a plurality of confectionery ingredients within at least one of the barrel sections 46. The planetary screws 54 are rotatable about an axis A of the center shaft 48 in the same direction of rotation as the center shaft 48, and are rotatable about their own axes B in a direction opposite the rotation of the center shaft 48. The number of screws 54 used in the planetary roller extruder 30 depends on the particulars of the confectionery being manufactured, with two or more screws 54 being used in each barrel section 46. In embodiments having a plurality of connected barrel sections 46, the number of screws 54 within each barrel section 46, may be identical, or alternatively, may be different.

An inner wall 56 of the mixing barrel 44 and an outer surface 58 of the central shaft 48 combine to form a mixing annulus 60 (FIG. 3), in which the screws 54 are disposed, and a confectionery composition will flow and be mixed. Within this annulus 60, each of the screws 54, center shaft 48, and wall 56 include corresponding or mate-able grooving or flights 62, 64, 66. These flights 62, 64, 66 assist in efficiently mixing the confectionery composition flowing through the extruder 30. The screws 54 may have any desirable flight configuration (i.e. variance in the gaps between the flights, flight shape, flight length, etc.), which will therefore create variation in the corresponding flights of the center shaft 48 and wall 56.

The planetary roller extruder 30 illustrated and described herein is the mixer to be selected according to the invention. It should be appreciated that other types of mixers or extruders, such as a twin screw extruder for example, may be desirable for use in the below discussed systems and methods for extruding a confectionery. However, the below will be described with reference to a planetary roller extruder as shown in Figures 2-5.

The planetary roller extruder 30 includes at least one point of entry 70 for supplying ingredients to the planetary roller extruder 30. For example, a point of entry 70 is typically located in the feed section 42, or downstream from the feed section 42 in one of the barrel sections 46 of the mixing barrel 44. Alternatively, or in addition, one or more point of entry 70 may be located at the connection between adjacent barrel sections 46. The position of these points of entry 70 is selected depending on the application, the ingredient being added, and the form of the ingredient being added. Various types of feed inlets 72 may be arranged at each of the points of entry 70 to supply one or more ingredients to the inner volume of the planetary roller extruder 30. One type of feed inlet 72 is a gravity driven hopper/feeder. Other feed inlets 72 include a side feed inlet configured to provide a supply of one or more ingredients laterally to a side of the planetary roller extruder 30.

An extrusion point 74 is arranged at the extrusion end 52 of the planetary roller extruder 30, adjacent a downstream end of the screws 54 and/or central shaft 48. An extruder die 76 is fluidly coupled to the extrusion end 52 of the mixing barrel 44 such that the confectionery composition dispelled therefrom has a shape complementary to the die 76. In one embodiment, a melt pump or other gear pump 78 is positioned between the extrusion end 52 and the extrusion die 76. The melt pump 78 is configured to assist in the extrusion of a confectionery product by receiving the unformed confectionery composition from the extrusion end 52 and providing it with a desired pressure to the extrusion die 76.

The planetary roller extruder 30 additionally includes at least one temperature control system 80 configured to efficiently control a temperature of the confectionery composition being mixed within the planetary roller extruder 30. An example of a temperature control system 80 includes one or more fluid channels running longitudinally or circumferentially through at least one of a portion of the mixing barrel 44, the central shaft 48. In one embodiment, the temperature control system 80 is configured to heat the confectionery composition within a portion of the mixing barrel 44, such as a portion directly downstream from the feed section 42 for example. Alternatively, or in addition, the temperature control system 80 may be configured to cool the confectionery composition within a portion of the mixing barrel 44.

The planetary roller extruder 30 is additionally configured to remove moisture in the form of vapor, such as water for example, from the confectionery composition as it is being formed therein through an opening or vent 84 arranged in a portion of the mixing barrel 44 or at an interface between adjacent barrel sections 46. The opening 84 may, but need not be arranged within the same portion of the mixing barrel 44 to which the at least one temperature control system 80 is applied. In one embodiment, a vacuum or other pump (not shown) is fluidly coupled to the opening 84 and is configured to draw an increased amount of moisture from the interior of the planetary roller extruder 30, and the confectionery composition located therein.

As shown, formation of a confectionery, such as a soft, chewy candy for example, may occur entirely within the planetary roller extruder 30. To form a confectionery, multiple ingredients are added to the planetary roller extruder 30, such as via a feed inlet 72 operably coupled to the feed section 42. The plurality of ingredients may be added via one or more feed inlets 72 disposed at the same entry point 70 or at different entry points 70 of the planetary roller extruder 30, thereby allowing for varying durations of mixing of the ingredients. The ingredients may be added in a variety of forms, including but not limited to, powder, liquid, flake, or a molten form for example. The ingredients added to the planetary roller extruder 30 will vary depending on the confectionery being formed. Typical ingredients added to the planetary roller extruder 30 to form a soft, chewy candy include, but are not limited to sugar, polyol, glucose, fat, color, and flavor. In addition, one or more of water, an emulsifier, a hydrocolloid, and an acid may be added to any point of entry 70 of the planetary roller extruder 30 during the formation of a confectionery.

In addition to the screw design, rotation of the central shaft 48 about axis A, and the plurality of screws 54 about axis A and their respective axes B, causes a directional flow of the mixture of the ingredients towards the extrusion point 52 of the mixing barrel 44. As the confectionery ingredients move away from the feed section 42 of the extruder 30, the shaft 48 and rotating screws 54 mix the ingredients via movement of the flow through the spaces 60 defined between the flights 62, 64, 66 of the rotating screws 54, center shaft 48 and wall 56. As the ingredients are conveyed and mixed, the ingredients form a confectionery composition.

As the confectionery composition passes through a portion of the mixing barrel 44, to which a first temperature control system 80a is applied, the temperature of the confectionery composition changes. For example, during formation of a soft, chewy candy, the confectionery composition within a corresponding portion of the mixing barrel 44 is heated by the first temperature control system 80a to a temperature between about 110°C and 145°C. In the illustrated, non-limiting embodiment, the temperature control system 80a is configured to heat the confectionery composition by circulating a hot fluid, such as water, steam, or oil having a temperature of about 150°C for example, through the one or more fluid channels 82 formed in one or more barrels sections 46 of the planetary roller extruder 30. In addition, the mechanical work generated as the rotating screws 54 mix the confectionery composition contributes to heating the confectionery composition within the planetary roller extruder 30. As heat transfers from the hot fluid to the adjacent confectionery composition, the heat helps dissolve one or more of the ingredients therein, for example sugar.

As the confectionery composition passes opening 84 in the mixing barrel 44, a desired amount of moisture is removed from the confectionery composition. The amount of moisture removed is dependent on the type of confectionery being formed, the added ingredients, the form of the added ingredients, and the extrusion parameters. For example, when the planetary roller extruder 30 is used to form a soft chewy candy, about 6-9% of the final confectionery composition output from the extruder 30 is moisture. In the illustrated, non-limiting embodiment, the opening 84 is positioned within a same barrel section 46 as the first temperature control system 80a such that heating and dehydration of the confectionery composition occur simultaneously. As a result of this combined heating and moisture removal within the planetary roller extruder 30, the need to boil the confectionery composition to dissolve one or more ingredients and remove moisture therefrom that exists in conventional confectionery manufacturing processes is eliminated.

In the simplest operation of the planetary roller extruder 30, after being heated and having moisture removed therefrom, the mixed confectionery composition is provided to the extrusion point 52 adjacent the downstream ends of the screws 54 and the center shaft 48. Extrudate of a final confectionery composition 32 is expelled from the extruder 30 via the extruder die 76 in a desired shape complementary to the extruder die 76, such as one or more ropes or strands. The ropes may be of any shape or size desired, including circular, rectangular, or any other formation desired, and typically have a substantially constant cross-sectional area.

In one embodiment, the extruder die 76 is configured such that the size of the confectionery extrudate 32, such as a diameter, width, and/or thickness for example, is substantially identical to a finalized confectionery product. As a result, aside from cutting the extrudate into individual pieces, no further sizing of the extrudate 32 is necessary prior to packaging the confectionery. In addition, the extrudate 32 output from the planetary roller extruder 30 may be considered "consumer ready" such that no further treatment or other processes need be applied to the extrudate prior to consumption.

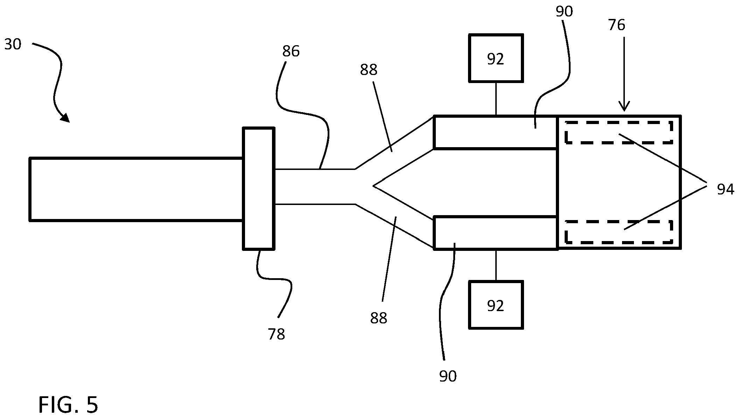

Alternatively, as shown in FIG. 5, a melt pump 78 may be mounted at the extrusion end 52 of the extruder 20 and is configured to move the composition into an adjacent conduit 86 having multiple flow channels 88 with a consistent flow rate. As a result of the pressure drop within the channels 88, the composition will be directed simultaneously into the plurality of channels 88 of the conduit 86. Each respective flow channel 88 is connected to a block 90, such that a color and/or flavor is added to the portion of confectionery composition disposed therein via a liquid dosing system 92. From the block 90, each flow of confectionery composition is supplied to a respective static mixer 94 arranged within the extruder die. The static mixer 94 is configured to mix the confectionery composition to evenly distribute the color and or flavor before the composition is extruded through an opening in the die having a desired shape. Accordingly, in such embodiments, the extruder is configured to generate multiple confectionery products differing in at least one of color and flavor simultaneously.

In another embodiment, the planetary roller extruder 30 may additionally include an aeration unit 96 configured to supply a gas, such as an inert gas or dry air for example, into a respective portion of the planetary roller extruder 30. In the illustrated, non-limiting embodiment, the aeration unit 96 is arranged in a portion of the mixing barrel 44 downstream from the moisture removal opening 84. However, in other embodiments, the aeration unit 96 may be arranged at any location within the mixing barrel 44. The amount of gas added to the confectionery composition directly controls a reduction in the density of the confectionery composition.

Because injection of a stream of gas via the aeration unit 96 provides not only an increased amount of gas, but also more accurate control of the density than conventional pulling mechanisms, a confectionery composition having a density less than or equal to .8g/cc may be achieved. In addition, it would be very difficult (if possible at all) to use a twin screw extruder with a length identical to the planetary roller extruder to achieve a homogeneously mixed confectionery composition having a density less than or equal to about .8g/cc. Due to the reduced number of screws and the temperature limitations of a twin screw extruder, the amount of time required to adequately cool the confectionery composition would exceed the time that the injected gas would remain trapped within the composition.

Alternatively, or in addition, the planetary roller extruder 30 may include a second temperature control system 80b configured to alter the temperature of the confectionery composition within another portion of the mixing barrel 44. The second temperature control system 80b may be separate from or may be integrally formed with the first temperature control system 80a. As the confectionery composition flows through a corresponding portion of the mixing barrel 44, such as a barrel section 46 downstream from the first temperature control system 80a for example, the confectionery composition is cooled. In the illustrated, non-limiting embodiment, the second temperature control system 80b is configured to cool the confectionery composition by circulating a cool fluid, such as refrigerant or glycol having a temperature of about -30°C for example. In embodiments where the confectionery being formed is a soft chewy candy, the confectionery composition is generally cooled to about 30°C-50°C.

The planetary roller extruder 30 may also be used to form a confectionery having a greater range of parameters than confectioneries formed using conventional manufacturing methods and equipment. Adjustable parameters that are known to affect the confectionery being formed include, but are not limited to, individual and planet rotational speed of the screws 54, the number of screws 54, the configuration of the screws 54, temperature, gas addition, moisture removal, and sugar type. Because modification of one or more of these parameters may significantly impact the final confectionery composition, the mixer 30 disclosed herein provides for substantial flexibility in the final confectionery composition. For example, the planetary roller extruder 30 is configured to produce a confectionery having a hardness between about 150 and 20000 g, a stickiness between about -180 and -1 g.sec, a graininess between about no grains/crystals and a high amount of grains/crystals presents with the crystal size up to 100 µm having any shape such as rod-pallet like, round, etc. and a density between about 0.5 and 1.6 g/cm³.

As a result of the lower surface area of a conventional twin screw extruder compared to a planetary roller extruder, it will be difficult, if possible at all, to efficiently cool a confectionery composition therein to a temperature sufficient to initiate crystallization, even with the application of a cooling temperature control system. Use of a planetary roller extruder 30 in conjunction with the second temperature control system 80b, however, allows the confectionery composition therein to be cooled to a temperature lower than may be achieved by other extruders or mixers. As a result, the mechanical shear generated by screws 54 of the extruder 30 when the composition is at a desired cool temperature causes the formation of crystals within the confectionery composition. Therefore, in the invention, according to which the mixer 30 is a planetary roller extruder, the planetary roller extruder 30 may be configured to make both a non-crystallized and crystallized confectioneries.

In some embodiments, a transition between forming a non-crystallized confectionery and a crystallized confectionery may be achieved without modifying the components of the mixer 30. For example, crystallization of the confectionery may be controlled based on the heat transfer that occurs between the hot confectionery composition and the cold refrigerant of the second temperature control system 80b. In such embodiments, the confectionery composition need not be seeded with a crystallization aid, such as a citric acid for example. Alternatively, or in addition, the mixer 30 may be easily adapted to produce a crystallized confectionery, such as by changing a configuration of the screws 54 within the planetary roller extruder 30 for example.

Formation of a confectionery product using the planetary roller extruder 30 disclosed herein eliminates the need for multiple pieces of machinery, such as a sugar dissolving unit, buffer tank, one or more cookers, a mixer, a pulling mechanism, and one or more cooling machines. Similarly, depending on the confectionery being formed, and therefore the ingredients being added, the ingredients may not need to be pre-mixed and water may not need to be added thereto prior to feeding the ingredients into the inlet 58. Operation of the planetary roller extruder 30 requires minimal manual labor, thereby reducing costs and increasing product reliability. In addition, because extruders are typically self-cleaning, any changeover in the machinery of the mixer 30 required between the formation of a first confectionery and a second confectionery is minimized and may occur within a limited period of time, for example half an hour.

Formation of a confectionery using the planetary roller extruder 30 as described herein is more efficient than conventional manufacturing processes. Because the entire formation of the confectionery occurs within a single machine, the length and overall footprint of the manufacturing system is significantly reduced, such as to a length less than or equal to fifteen meters, such as twelve meters for example. This reduction in equipment not only limits the exposure of the ingredients and confectionery composition to the atmosphere and external influences during formation, thereby making the resultant confectionery more sanitary, but also additionally decreases the time required to form a confectionery product. In one embodiment, the time elapsed from the initial input of ingredients to output from the extruder die 76 is less than 20 minutes, 10 minutes, or more particularly less than 5 minutes or even 1 minute. As a result, the overall throughput of the mixer 30 is increased to a rate of at least greater than one ton per hour. The throughput of conventional extruders, such as a twin screw extruder for example, typically depends in part on the overall length of the extruder. Accordingly, a twin screw extruder having a length less than or equal to fifteen meters would not be able to achieve a comparable throughput.

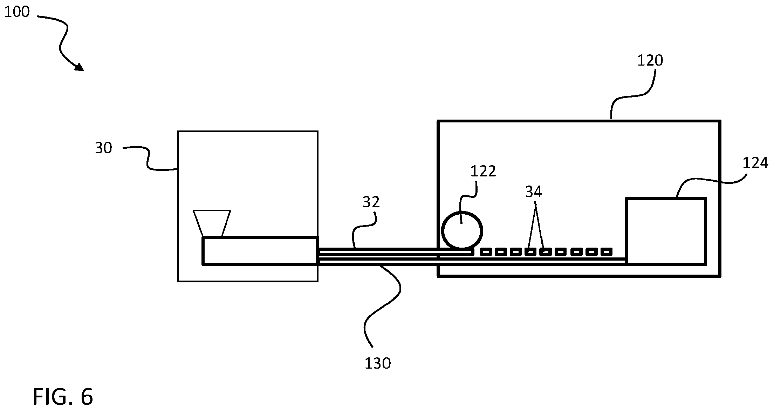

Referring now to FIG. 6, the planetary roller extruder 30 may be part of a system 100 for manufacturing a confectionery. In one embodiment, a downstream processing station 120 configured to further process the confectionery extrudate 32 is a cooling tunnel or other device configured to further cool the temperature of the confectionery extrudate 32. In another embodiment, the downstream processing station 120 may include cutting and packaging equipment. As shown in the non-limiting embodiment illustrated in FIG. 5, the cutting and packaging equipment may include a cutting device 122 configured to cut the confectionery extrudate 32, for example into a plurality of individual pieces 34. The plurality of cut pieces 34 may be provided to a packaging machine 124 configured to then wrap the cut pieces 34 individually or in groups to form a packaged confectionery product.

Alternatively, the output confectionery extrudate 32 may comprise one of a plurality of layers of a multilayer confectionery or comestible. For example, the downstream processing station 120 may include a combining block within which the extrudate 32 from the planetary roller extruder 30 and a second material are combined without exposing the extrudate 32 to the atmosphere.

The planetary roller extruder 30 may be located in one plant and the downstream processing station 120 may be located in a different plant wherein the confectionery extrudate 32 is transferred from one plant to the other for subsequent processes. Alternatively, the planetary roller extruder 30 may be coupled to and arranged in-line with the downstream processing station 120 such that the extrudate 32 from the planetary roller extruder 30 is delivered directly to the downstream processing station 120 by a transport device 130, such as a conveyor for example.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments of this invention are described herein, including the best mode known to the inventors for carrying out the invention. Variations of those embodiments may become apparent to those of ordinary skill in the art upon reading the foregoing description. The inventors expect skilled artisans to employ such variations as appropriate, and the inventors intend for the invention to be practiced otherwise than as specifically described herein. The subject-matter of the invention is defined in the claims.

## Claims

1. A method for extruding a confectionery, the method comprising:
supplying a plurality of ingredients to a planetary roller extruder (30);
mixing said plurality of ingredients to form a confectionery composition in said mixer (30);
removing moisture from said confectionery composition in said planetary roller extruder (30)
forming crystals in said confectionery composition while said confectionery composition is in said planetary roller extruder (30);
producing said confectionery composition to include a density between about 0.5 and 1.6 g/cm³; and
outputting said confectionery composition from said planetary roller extruder (30),
wherein said confectionery composition is a soft candy.

2. The method according to claim 1, wherein no additional sizing of the confectionery composition occurs after being output from said planetary roller extruder (30).

3. The method according to claim 1, further comprising:
supplying said confectionery composition output from said planetary roller extruder (30) directly to a packaging station (22).

4. The method according to claim 3, wherein no additional treatment of the confectionery occurs after being output from said planetary roller extruder (30).

5. The method according to claim 1, further comprising:
aerating said confectionery composition within said planetary roller extruder (30) to control a density thereof.

6. The method according to claim 5, fr, wherein said density of said confectionery composition is less than or equal to about .8g/cc.

7. The method according to claim 5, wherein aerating said confectionery composition includes inputting a stream of gas into said confectionery composition.

8. The method according to claim 1, wherein forming crystals in said confectionery composition occurs as a result of mechanical shear generated by said planetary roller extruder (30) when said confectionery composition is at a given temperature.

9. The method according to claim 8, further comprising heating said confectionery composition within said planetary roller extruder (30).

10. The method according to claim 9, wherein cooling said confectionery composition occurs downstream from said heating said confectionery composition.

11. The method according to claim 1, wherein the confectionery is configured as one of a plurality of layers of a multilayer confectionery, and combining the confectionery with another of said plurality of layers of said multilayer confectionery occurs before the confectionery is exposed to an atmosphere.

12. The method according to claim 1, wherein an elapsed time between supplying said plurality of ingredients to said planetary roller extruder (30) and outputting said confectionery composition from said mixer (30) is less than 20 minutes.

13. The method of forming a confectionery according to claim 1, wherein said confectionery composition is a first confectionery composition, the method further comprising:
outputting a second confectionery composition from said planetary roller extruder (30) following said outputting of said first confectionery composition, said second confectionery composition being output absent any formation of crystals.

## Patentansprüche

1. Verfahren zum Extrudieren einer Süßware, das Verfahren umfassend: Zuführen einer Vielzahl von Zutaten zu einem Planetwalzenextruder (30);
Mischen der Vielzahl von Zutaten, um eine Süßwarenzusammensetzung in dem Mischer (30) auszubilden;
Entfernen von Feuchtigkeit aus der Süßwarenzusammensetzung in dem Planetwalzenextruder (30)
Ausbilden von Kristallen in der Süßwarenzusammensetzung, während sich die Süßwarenzusammensetzung in dem Planetwalzenextruder (30) befindet;
Herstellen der Süßwarenzusammensetzung, um eine Dichte zwischen etwa 0,5 und
1,6 g/cm³ zu beinhalten; und
Ausgeben der Süßwarenzusammensetzung aus dem Planetwalzenextruder (30), wobei die Süßwarenzusammensetzung eine weiche Süßigkeit ist.

2. Verfahren nach Anspruch 1, wobei keine zusätzliche Dimensionierung der Süßwarenzusammensetzung erfolgt, nachdem sie aus dem Planetwalzenextruder (30) ausgegeben wird.

3. Verfahren nach Anspruch 1, ferner umfassend:
Zuführen der Süßwarenzusammensetzungsausgabe aus dem Planetwalzenextruder (30) direkt zu einer Verpackungsstation (22).

4. Verfahren nach Anspruch 3, wobei keine zusätzliche Behandlung der Süßware erfolgt, nachdem sie aus dem Planetwalzenextruder (30) ausgegeben wird.

5. Verfahren nach Anspruch 1, ferner umfassend:
Belüften der Süßwarenzusammensetzung innerhalb des Planetwalzenextruders (30), um eine Dichte davon zu steuern.

6. Verfahren nach Anspruch 5, wobei die Dichte der Süßwarenzusammensetzung kleiner als oder gleich etwa,8 g/cc ist.

7. Verfahren nach Anspruch 5, wobei das Belüften der Süßwarenzusammensetzung ein Eingeben eines Gasstroms in die Süßwarenzusammensetzung beinhaltet.

8. Verfahren nach Anspruch 1, wobei das Ausbilden von Kristallen in der Süßwarenzusammensetzung als Folge einer mechanischen Scherung erfolgt, die durch den Planetwalzenextruder (30) erzeugt wird, wenn die Süßwarenzusammensetzung bei einer gegebenen Temperatur liegt.

9. Verfahren nach Anspruch 8, ferner umfassend ein Erhitzen der Süßwarenzusammensetzung innerhalb des Planetwalzenextruders (30).

10. Verfahren nach Anspruch 9, wobei ein Kühlen der Süßwarenzusammensetzung stromabwärts von dem Erhitzen der Süßwarenzusammensetzung erfolgt.

11. Verfahren nach Anspruch 1, wobei die Süßware als eine von einer Vielzahl von Schichten einer mehrschichtigen Süßware konfiguriert ist und ein Kombinieren der Süßware mit einer anderen der Vielzahl von Schichten der mehrschichtigen Süßware erfolgt, bevor die Süßware einer Atmosphäre ausgesetzt wird.

12. Verfahren nach Anspruch 1, wobei eine verstrichene Zeit zwischen dem Zuführen der Vielzahl von Zutaten zu dem Planetwalzenextruder (30) und dem Ausgeben der Süßwarenzusammensetzung aus dem Mischer (30) weniger als 20 Minuten beträgt.

13. Verfahren zum Ausbilden einer Süßware nach Anspruch 1, wobei die Süßwarenzusammensetzung eine erste Süßwarenzusammensetzung ist, das Verfahren ferner umfassend:
Ausgeben einer zweiten Süßwarenzusammensetzung aus dem Planetwalzenextruder (30) nach dem Ausgeben der ersten Süßwarenzusammensetzung, wobei die zweite Süßwarenzusammensetzung ohne eine beliebige Ausbildung von Kristallen ausgegeben wird.

## Revendications

1. Procédé permettant d'extruder une confiserie, le procédé comprenant :
l'alimentation d'une pluralité d'ingrédients à une extrudeuse à rouleau planétaire (30) ;
le mélange de ladite pluralité d'ingrédients pour former une composition de confiserie dans ledit mélangeur (30) ;
l'élimination de l'humidité de ladite composition de confiserie dans ladite extrudeuse à rouleau planétaire (30)
la formation de cristaux dans ladite composition de confiserie alors que ladite composition de confiserie est dans ladite extrudeuse à rouleau planétaire (30) ;
la production de ladite composition de confiserie pour qu'elle comporte une masse volumique entre environ 0,5 et 1,6 g/cm³ ; et
la sortie de ladite composition de confiserie de ladite extrudeuse à rouleau planétaire (30), ladite composition de confiserie étant un bonbon mou.

2. Procédé selon la revendication 1, dans lequel aucun calibrage supplémentaire de la composition de confiserie ne se produit après qu'elle est sortie de ladite extrudeuse à rouleau planétaire (30).

3. Procédé selon la revendication 1, comprenant en outre :
l'alimentation de ladite composition de confiserie délivrée en sortie par ladite extrudeuse à rouleau planétaire (30) directement vers une station d'emballage (22).

4. Procédé selon la revendication 3, dans lequel aucun traitement supplémentaire de la confiserie ne se produit après qu'elle est sortie de ladite extrudeuse à rouleau planétaire (30).

5. Procédé selon la revendication 1, comprenant en outre :
l'aération de ladite composition de confiserie au sein de ladite extrudeuse à rouleau planétaire (30) pour commander une masse volumique de celle-ci.

6. Procédé selon la revendication 5, dans lequel ladite masse volumique de ladite composition de confiserie est inférieure ou égale à environ 0,8 g/cm³.

7. Procédé selon la revendication 5, dans lequel l'aération de ladite composition de confiserie comporte l'introduction d'un courant de gaz dans ladite composition de confiserie.

8. Procédé selon la revendication 1, dans lequel la formation de cristaux dans ladite composition de confiserie se produit en conséquence d'un cisaillement mécanique généré par ladite extrudeuse à rouleau planétaire (30) lorsque ladite composition de confiserie est à une température donnée.

9. Procédé selon la revendication 8, comprenant en outre le chauffage de ladite composition de confiserie au sein de ladite extrudeuse à rouleau planétaire (30).

10. Procédé selon la revendication 9, dans lequel le refroidissement de ladite composition de confiserie se produit en aval dudit chauffage de ladite composition de confiserie.

11. Procédé selon la revendication 1, dans lequel la confiserie est conçue en tant qu'une parmi une pluralité de couches d'une confiserie multicouche, et la combinaison de la confiserie avec une autre parmi ladite pluralité de couches de ladite confiserie multicouche se produit avant que la confiserie ne soit exposée à une atmosphère.

12. Procédé selon la revendication 1, dans lequel un temps écoulé entre l'alimentation de ladite pluralité d'ingrédients à ladite extrudeuse à rouleau planétaire (30) et la sortie de ladite composition de confiserie dudit mélangeur (30) est inférieur à 20 minutes.

13. Procédé de formation d'une confiserie selon la revendication 1, dans lequel ladite composition de confiserie est une première composition de confiserie, le procédé comprenant en outre :
la sortie d'une seconde composition de confiserie de ladite extrudeuse à rouleau planétaire (30) à la suite de ladite sortie de ladite première composition de confiserie, ladite seconde composition de confiserie étant délivrée en sortie en l'absence d'une quelconque formation de cristaux.
